# EUROPÄISCHE PATENTSCHRIFT

(11) **EP 1 289 869 B1**
(45) Veröffentlichungstag und Bekanntmachung des Hinweises auf die Patenterteilung: **25.08.2004**
(21) Anmeldenummer: 01919215.2
(22) Anmeldetag: 14.03.2001
(51) Int. Cl.: B66B 11/04, H02K 41/02

(54) **VORRICHTUNG ZUM VERTIKALEN TRANSPORTIEREN VON PRODUKTEN**
DEVICE FOR VERTICALLY TRANSPORTING PRODUCTS
DISPOSITIF POUR LE TRANSPORT VERTICAL DE PRODUITS

(30) Priorität: 16.03.2000 DE 10013833
(43) Veröffentlichungstag der Anmeldung: 12.03.2003
(73) Patentinhaber: Leibniz-Institut für Festkörper- und Werkstoffforschung Dresden e.V., 01069 Dresden (DE); Elektrische Automatisierungs- und Antriebstechnik EAAT Gmbh, 09120 Chemnitz (DE); HAP Handhabungs-, Automatisierungs- und Präzisionstechnik GmbH, 01217 Dresden (DE)
(72) Erfinder: KRABBES, Gernot, 01809 Heidenau (DE); FUCHS, Günter, 01237 Dresden (DE); PFEIFFER, Wilfried, 01309 Dresden (DE); BUDIG, Peter-Klaus, 09122 Chemnitz (DE); BINNEBERG, Armin, 01705 Freital (DE); SCHUMANN, Bernhardine, 01309 Dresden (DE); POLLACK, Steffen, 01326 Dresden (DE)
(74) Vertreter: Rauschenbach, Dieter, Dipl.-Ing. (FH)
(86) Internationale Anmeldenummer: PCT/DE2001/001042
(87) Internationale Veröffentlichungsnummer: WO 2001/068499

(56) Entgegenhaltungen:
- DE-A- 2 343 461
- DE-A- 19 737 839
- US-A- 5 141 082
- US-A- 5 476 046

## Beschreibung

### Technisches Gebiet

Die Erfindung betrifft eine Vorrichtung zum vertikalen Transportieren von Produkten, insbesondere für Bearbeitungsanlagen von Halbleiterwafern und Discs.

Die Vorrichtung ist besonders vorteilhaft für die Produktion von integrierten Halbleiterprodukten in Reinräumen in Verbindung mit solchen Transportsystemen einsetzbar, bei denen die zu bearbeitenden Produkte zwischen unterschiedlichen Ebenen zu transportieren sind.

### Stand der Technik

Transportsysteme für die Mikroelektronik-Industrie unterliegen speziellen Anforderungen nach Reinraumgerechtheit. Für den Transport z. B. von Behältern (Waferkassetten - Carrier oder Pods) für die Wafer-Strukturierung in der Mikroelektronik ist in modernen Fertigungsstätten ein erheblicher technischer und finanzieller Aufwand erforderlich. Das Transportsystem ist in der Regel unter der Decke der Reinraumbereiche in einer Länge von mehreren Kilometern angeordnet (DE 197 37 839 A1). Die Behälter müssen über eine Vielzahl von Liften in die Arbeitshöhe der Equipments befördert werden und verbleiben zwischen den einzelnen Bearbeitungsprozessen in mehreren Zwischenlagern (Stocker) im Transportsystem.

Die zu bearbeitenden Produkte verbleiben in der Regel mehrere Wochen im Produktionsprozess und werden mehrfach zwischen den einzelnen Bearbeitungsbereichen und Equipments über das Transportsystem hin und her transportiert, wobei die Produkte im offenen Behälter gelagert sind.

Die bisher bekannten Lifte enthalten einen Behälter mit Wafern oder anderen Mikroelektronik-Baugruppen sowie einen Antrieb mit Motor, Bewegungsumformer, Schlitten und Führung.

Bei den bekannten technologischen Lösungen der Transportsysteme und den zugehörigen Liften, die eine Lasteinheit zur Aufnahme der Produkte und einen Antrieb zur vertikalen Bewegung der Lasteinheit enthalten, gibt es eine Vielzahl von Reibpaarungen, beispielsweise in Lager- und Antriebsrollen, Gleitführungen, Antriebsmotoren. Diese sind einerseits durch die Anforderungen der Einhaltung der Reinraumbedingungen mit hohem technischen Aufwand zur Vermeidung des Eindringens von Staubpartikeln aus dem Abrieb mit entsprechenden Abschirmungen ausgestattet, andererseits bergen sie die Gefahr, dass bei technischem Ausfall mechanische Stöße auf die Produkte übertragen werden können. Beides führt zu Beschädigungen, Qualitätsminderungen oder Ausschuss bei den Produkten und somit ökonomischen Verlusten. Zu weiteren relevanten Stand der Technik siehe auch US 5 476 046 A.

### Darstellung der Erfindung

Der Erfindung liegt die Aufgabe zugrunde, eine Vorrichtung zum vertikalen Transportieren von Produkten, insbesondere für Bearbeitungsanlagen von Halbleiterwafern und Discs, so zu gestalten, dass kein mechanischer Abrieb entstehen kann und mechanische Stöße weitgehend vermieden werden.

Diese Aufgabe ist bei einer Vorrichtung, die eine Lasteinheit zur Aufnahme der Produkte und einen Antrieb zur vertikalen Bewegung der Lasteinheit enthält, gelöst, wobei die Lasteinheit und der Antrieb durch Anwendung magnetischer Bauteile reibpaarungsfrei ausgebildet und berührungslos miteinander gekoppelt sind, indem
a) magnetisierte supraleitende Formkörper angeordnet sind, die im Zusammenwirken mit vertikal angeordneten Dauermagnetschienen eine magnetische Spurhalteeinrichtung für die Lasteinheit bilden, wobei mittels eines in den supraleitenden Formkörpern definiert eingefrorenen Magnetfeldes ein konstanter Luftspalt zwischen Lasteinheit und Dauermagnetschienen eingestellt ist,
b) die magnetisierten supraleitenden Formkörper mit einem Kühlmittel auf die für den supraleitenden Zustand erforderliche Temperatur gekühlt sind,
   und
c) der Antrieb mit einem oder mehreren elektromagnetischen Linearantrieben realisiert ist, die jeweils aus einem System permanentmagnetisch erregter Pole und einem vor oder zwischen den Polen beweglich angeordneten stromgespeisten Spulensystem bestehen.

Die erfindungsgemäße Vorrichtung zeichnet sich gegenüber bekannten Liften in Bearbeitungsanlagen für integrierte Halbleiterprodukte insbesondere dadurch aus, dass die Lasteinheit und der Antrieb reibpaarungsfrei ausgebildet und berührungslos miteinander gekoppelt sind, so dass keinerlei mechanischer Abrieb entstehen kann. Damit ist die erfindungsgemäße Vorrichtung in ausgezeichneter Weise für die Anwendung in Reinräumen geeignet.

Die erfindungsgemäße Vorrichtung kann in folgender Weise vorteilhaft und/oder zweckmäßig ausgestaltet sein:

Die magnetisierten supraleitenden Formkorper können an der Lasteinheit und die Dauermagnetschienen stationär angeordnet sein. Es ist jedoch auch eine gegenseitig vertauschte Anordnung möglich.

Für den Fall, dass die magnetisierten supraleitenden Formkörper an der Lasteinheit angeordnet werden, sollte diese zweckmäßigerweise mit einem Kühlmittelbehälter zur Aufnahme des Kühlmittels für die Kühlung der magnetisierten supraleitenden Formkörper ausgerüstet sein.

Der Kühlmittelbehälter kann vorteilhaft einen Ringkanal für die Kühlmittelzirkulation aufweisen und muss mit einem Einfüllstutzen für das Kühlmittel ausgestattet sein.

Zweckmäßigerweise kann der Einfüllstutzen in der unteren und/oder der oberen Endposition der Lasteinheit mit einem Kühlmittelvorratsbehälter zum Nachladen von Kühlmittel verbunden sein. Als Kühlmittel kann flüssiger Stickstoff verwendet sein.

Die magnetisierten supraleitenden Formkörper können in der Wandung des Kühlmittelbehälters angeordnet sein und an ihrer Rückseite vom Kühlmittel gekühlt werden. Dabei kann die Rückseite der magnetisierten supraleitenden Formkörper zur Gewährleistung eines guten Wärmeübergangs mit einer gut wärmeleitenden Platte kontaktiert sein, die vorzugsweise aus Kupfer besteht.

Die magnetisierten supraleitenden Formkörper können vorteilhaft aus YBa₂Cu₃O₇ bestehen.

Die Dauermagnetschienen können aus aneinander gereihten, magnetisch quer zur Schienenlängsachse gepolten Dauermagnetplatten bestehen, wobei nebeneinander liegende Dauermagnetplatten quer zur Schienenlängsachse eine ungleichnamige magnetische Polung aufweisen.

Die Dauermagnetplatten können beispielsweise aus einer Nd-Fe-B-Legierung bestehen.

In der unteren und/oder der oberen Endposition der Lasteinheit gegenüber der dabei erreichten Position der an der Lasteinheit befindlichen magnetisierten supraleitenden Formkörper kann in zweckmäßiger Weise mit definiertem Abstand eine Magnetanordnung zum Aufprägen des in den supraleitenden Formkörpern einzufrierenden Magnetfeldes angeordnet sein. Dabei ist der Abstand so bemessen, dass sich die zwischen Lasteinheit und Dauermagnetschienen gewünschte Luftspaltgröße ergibt. Zweckmäßig ist es, wenn die Größe des Luftspaltes zwischen Lasteinheit und Dauermagnetschienen auf einen Wert zwischen 0,15 mm und 2,0 mm eingestellt ist.

Vorteilhaft ist es, wenn die magnetisierten supraleitenden Formkörper unter einer vakuumdichten Abdeckung angeordnet sind. Diese sollte aus einem unmagnetischen und elektrisch nichtleitenden Werkstoff bestehen.

Gemäß einer weiteren vorteilhaften Ausgestaltung der Erfindung kann die Vorrichtung mit einem oder mehreren Feinstellmechanismen zum Justieren der Lage und der Winkelposition der magnetischen Bauteile ausgerüstet sein.

Bei den elektromagnetischen Linearantrieben kann das System permanentmagnetisch erregter Pole stationär und das stromgespeiste Spulensystem an der Lasteinheit angeordnet sein.

Die Wicklung des stromgespeisten Spulensystems kann zweckmäßig als Zweiphasenwicklung ausgeführt sein.

Das System permanentmagnetisch erregter Pole kann einseitig oder vorteilhaft beidseitig zum stromgespeisten Spulensystem angeordnet sein. Bei beidseitiger Anordnung können sich Pole mit gleichnamiger oder auch mit ungleichnamiger magnetischer Polarität gegenüber stehen.

Nachstehend ist die Erfindung anhand eines Ausführungsbeispiels und zugehöriger Zeichnungen näher erläutert.

### Kurze Beschreibung der Zeichnungen

In den Zeichnungen zeigen:
- Fig. 1a:: einen Querschnitt einer Vorrichtung in Prinzipdarstellung,
- Fig. 1b:: einen Längsschnitt von der in Fig. 1a dargestellten Vorrichtung,
- Fig. 2 :: eine Seitenansicht von der in den Fig. 1a und 1b dargestellten Vorrichtung
- Fig. 3a:: eine Draufsicht auf einen Kühlmittelbehälter in teilweiser Schnittdarstellung,
- Fig. 3b:: eine Seitenansicht von dem in Fig. 3a dargestellten Kühlmittelbehälter,
- Fig. 4 :: eine Prinzipdärstellung eines Linearantriebs,
- Fig. 5 :: die Draufsicht auf die magnetische Spurhalteeinrichtung der Vorrichtung in Prinzipdarstellung.

### Bester Weg zur Ausführung der Erfindung

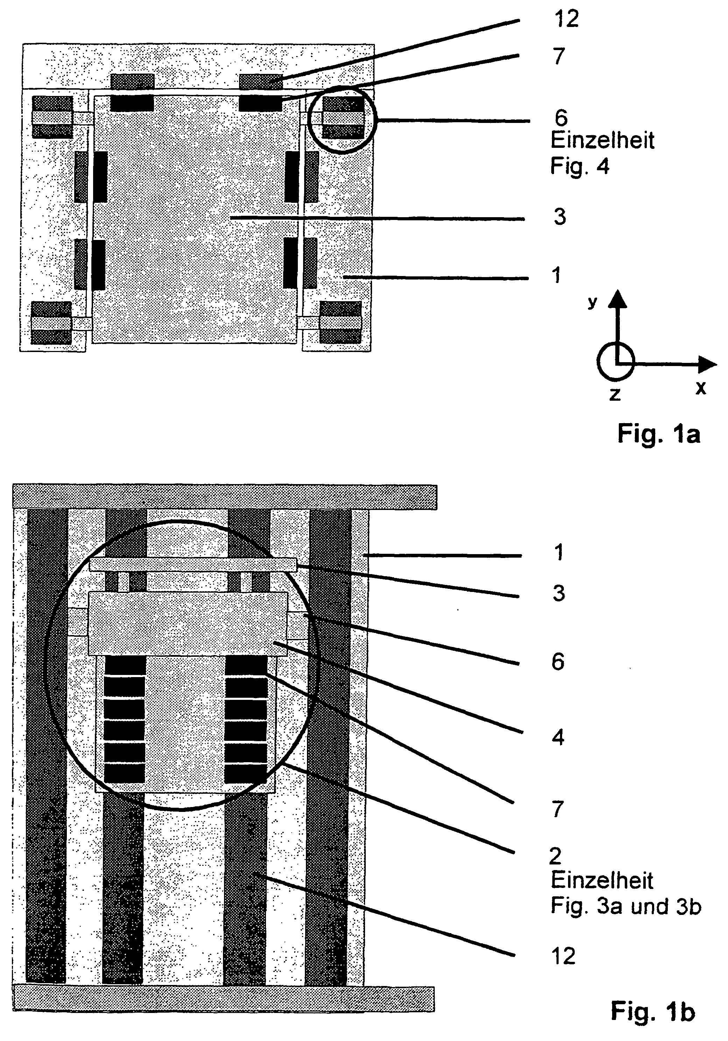

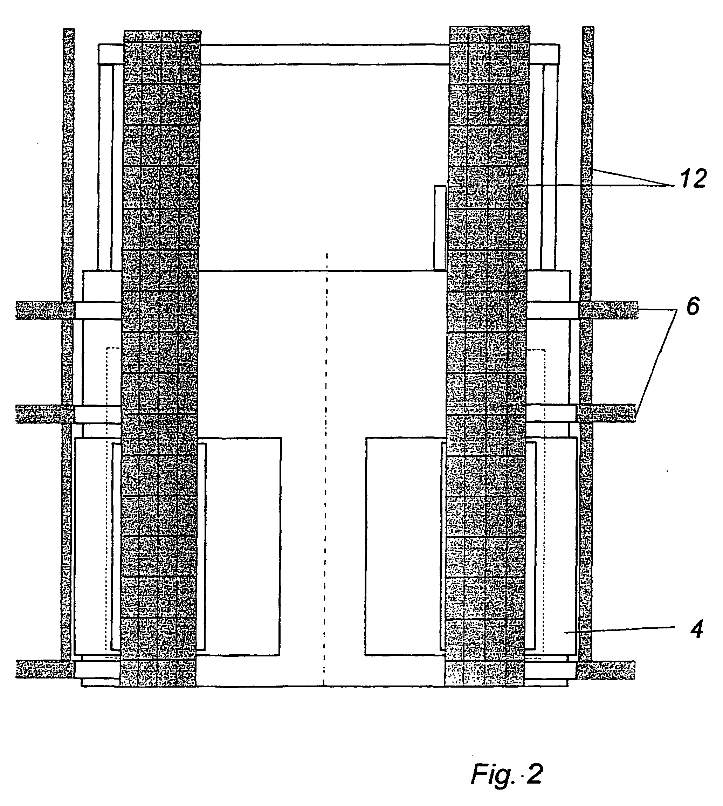

In einem schachtartigen Gehäuse 1 ist eine Lasteinheit 2 angeordnet, die aus einem Ladedeck 3 und einem Kühlmittelbehälter 4 besteht (Fig. 1a, 1b und 2). Die Lasteinheit 2 wird in dem schachtartigen Gehäuse 1 durch magnetische Bauteile in vertikaler Richtung transportiert und berührungsfrei zum Gehäuse 1 gehalten.

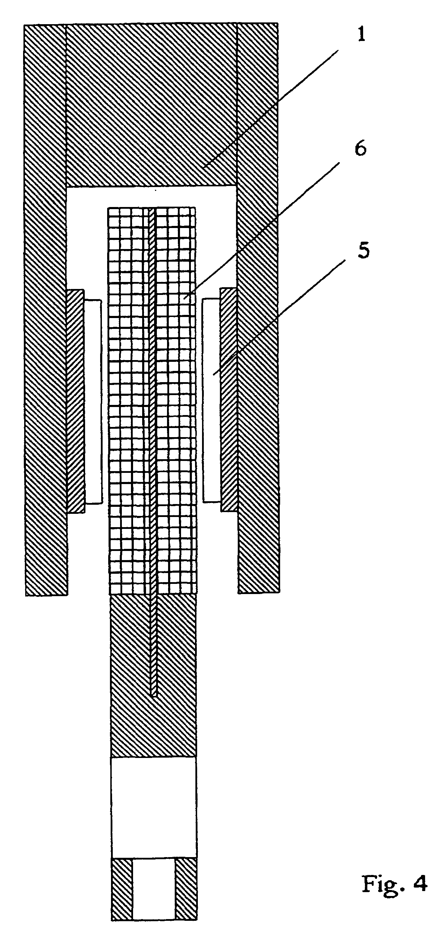

Zum Transport dienen dabei mehrere elektromagnetische Linearantriebe. Diese bestehen aus einem im Gehäuse 1 vertikal angeordneten stationären System permanentmagnetisch erregter Pole 5 und einem am Kühlmittelbehälter 4 angeordneten stromgespeisten Spulensystem 6 (Fig. 4). Das System permanentmagnetisch erregter Pole 5 ist beidseitig des stromgespeisten Spulensystems 6 angeordnet. Dabei weisen die sich gegenüber stehenden Pole 5 eine gleichnamige magnetische Polarität auf. Die Wicklung des stromgespeisten Spulensystems 6 ist als Zweiphasenwicklung ausgeführt.

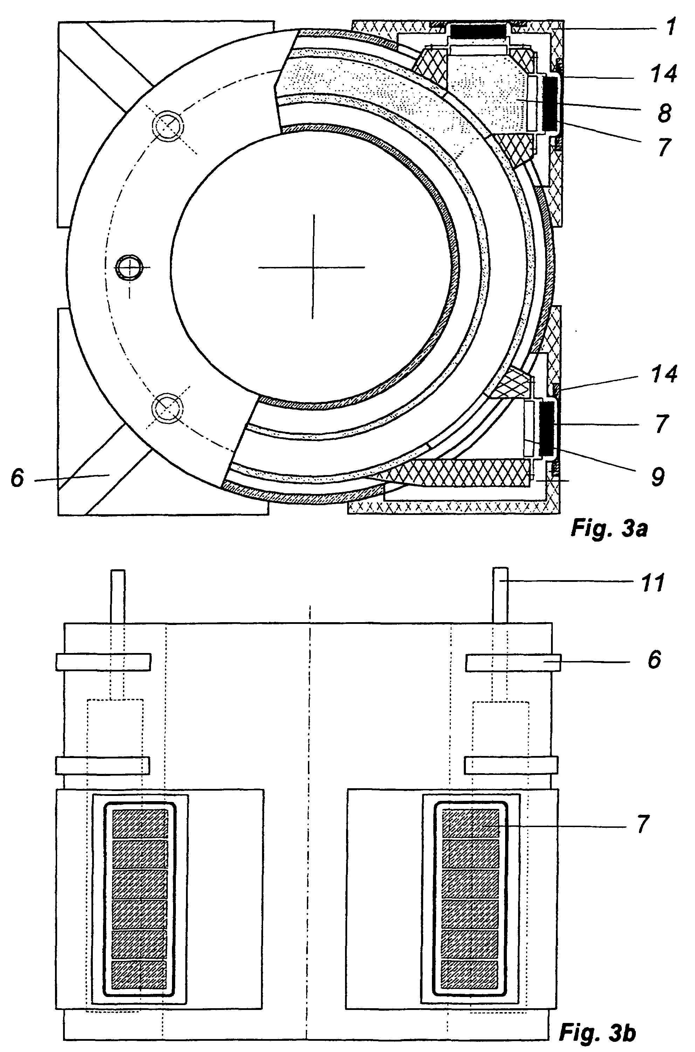

Am Kühlmittelbehälter 4 sind außerdem supraleitende Formkörper 7 angeordnet, die aus dem Supraleiterwerkstoff YBa₂Cu₃O₇ bestehen (Fig. 3a und 3b). Diesen Formkörpern 7 ist bei einer Temperatur von 77 K ein definiertes Magnetfeld aufgeprägt und eingefroren worden. Die Formkörper 7 werden mit dem im Kühlmittelbehälter 4 vorhandenen Kühlmittel 8, das aus flüssigem Stickstoff besteht, bei 77 K gehalten. Zur Gewährleistung eines guten Kühleffektes sind die Formkörper 7 an ihrer Rückseite mit einer gut wärmeleitenden Platte 9 verbunden, die vom Kühlmittel 8 gekühlt wird. Das Kühlmittel 8 strömt dabei im Kühlmittelbehälter 4 in einem Ringkanal 10. Der Kühlmittelbehälter 4 kann in der oberen Endposition der Lasteinheit 2 über einen Einfüllstutzen 11 aus einem in der Zeichnung nicht dargestellten Kühlmittelvorratsbehälter mit Kühlmittel 8 nachgefüllt werden.

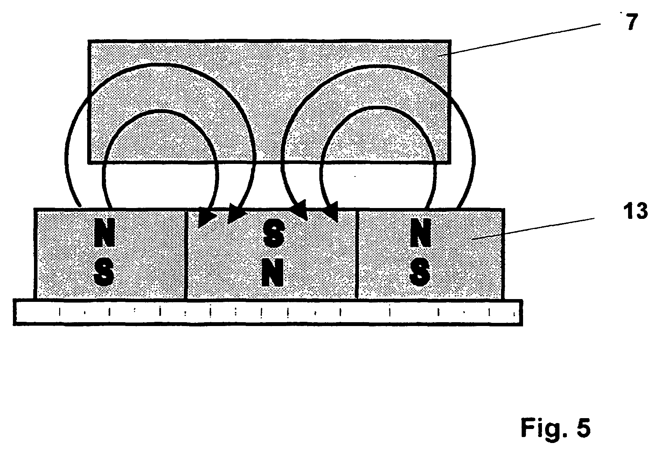

Korrespondierend zur Position der supraleitenden magnetischen Formkörper 7 sind im Gehäuse 1 stationäre Dauermagnetschienen 12 vertikal angeordnet. Diese bestehen aus einzelnen aneinander gereihten Dauermagnetplatten 13 aus einer Nd-Fe-B-Legierung. Die Anordnung ist so gewählt, dass nebeneinander liegende Dauermagnetplatten 13 eine ungleichnamige magnetische Polung aufweisen (Fig. 5).

Die Formkörper 7 sind an der Lasteinheit 2 hinter einer vakuumdichten Abdeckung 14 angeordnet, die aus einem unmagnetischen und elektrisch nichtleitenden Werkstoff besteht. Für das oben erwähnte Aufprägen des definierten Magnetfeldes auf die Formkörper 7 ist zunächst die Lasteinheit 2 im Abstand von 0,5 mm gegenüber einer Dauermagnetanordnung positioniert worden, die hinsichtlich ihres Magnetfeldes identisch mit dem der Magnetschienen 12 ist. Dann sind die Formkörper 7 in dieser Position auf eine Temperatur von 77 K abgekühlt worden. Die Struktur des sich dabei in den Formkörpern 7 ausprägenden Magnetfeldes wird auf der Basis des durch den unter Supraleiterbedingungen in den Formkörpern 7 widerstandslos fließenden konstanten Ringstromes eingefroren, wodurch auch die Abstandsposition zu der Dauermagnetanordnung festgehalten wird. Hierdurch wird erreicht, dass die Lasteinheit 2 auch gegenüber der Dauermagnetschiene 12 stets in dem aufgeprägten Abstand gehalten werden. Daraus ergibt sich dann bei der Vertikalbewegung der Lasteinheit 2 eine feste Abstandsposition beziehungsweise der gewünschte konstante Luftspalt von 0,5 mm zwischen der Lasteinheit 2 und den Dauermagnetschienen 12, so dass die Spur der Lasteinheit 2 bei deren Vertikalbewegung exakt gehalten und Berührungen zwischen der Lasteinheit 2 und den Bauteilen des Gehäuses 1 vermieden werden.

Zum Justieren der Lage und der Winkelposition der magnetischen Bauteile ist die Vorrichtung außerdem mit einem oder mehreren, in den Zeichnungen nicht dargestellten Feinstellmechanismen ausgerüstet.

## Patentansprüche

1. Vorrichtung zum vertikalen Transportieren von Produkten, insbesondere für Bearbeitungsanlagen von Halbleiterwafern und Discs, enthaltend eine Lasteinheit zur Aufnahme der Produkte und einen Antrieb zur vertikalen Bewegung der Lasteinheit, wobei die Lasteinheit (2) und der Antrieb durch Anwendung magnetischer Bauteile reibpaarungsfrei ausgebildet und berührungslos miteinander gekoppelt sind, indem
d) magnetisierte supraleitende Formkörper (7) angeordnet sind, die im Zusammenwirken mit vertikal angeordneten Dauermagnetschienen (12) eine magnetische Spurhalteeinrichtung für die Lasteinheit (2) bilden, wobei mittels eines in den supraleitenden Formkörpern (7) definiert eingefrorenen Magnetfeldes ein konstanter Luftspalt zwischen Lasteinheit (2) und Dauermagnetschienen (12) eingestellt ist,
e) die magnetisierten supraleitenden Formkörper (7) mit einem Kühlmittel (8) auf die für den supraleitenden Zustand erforderliche Temperatur gekühlt sind,
und
f) der Antrieb mit einem oder mehreren elektromagnetischen Linearantrieben realisiert ist, die jeweils aus einem System permanentmagnetisch erregter Pole (5) und einem vor oder zwischen den Polen beweglich angeordneten stromgespeisten Spulensystem (6) bestehen.

2. Vorrichtung nach Anspruch 1, **dadurch gekennzeichnet, dass** die magnetisierten supraleitenden Formkörper (7) an der Lasteinheit (2) und die Dauermagnetschienen (12) stationär angeordnet sind.

3. Vorrichtung nach Anspruch 1 und 2, **dadurch gekennzeichnet, dass** die Lasteinheit (2) mit einem Kühlmittelbehälter (4) zur Aufnahme des Kühlmittels (8) für die Kühlung der magnetisierten supraleitenden Formkörper (7) ausgerüstet ist.

4. Vorrichtung nach Anspruch 3, **dadurch gekennzeichnet, dass** der Kühlmittelbehälter (4) einen Ringkanal (10) für die Kühlmittelzirkulation aufweist und mit einem Einfüllstutzen (11) für das Kühlmittel (8) ausgestattet ist.

5. Vorrichtung nach Anspruch 4, **dadurch gekennzeichnet, dass** der Einfüllstutzen (11) in der unteren und/oder der oberen Endposition der Lasteinheit (2) mit einem Kühlmittelvorratsbehälter zum Nachladen von Kühlmittel (8) verbunden ist.

6. Vorrichtung nach Anspruch 1, **dadurch gekennzeichnet, dass** als Kühlmittel (8) flüssiger Stickstoff verwendet ist.

7. Vorrichtung nach Anspruch 1 und 2, **dadurch gekennzeichnet, dass** die magnetisierten supraleitenden Formkörper (7) in der Wandung des Kühlmittelbehälters (4) angeordnet sind und an ihrer Rückseite vom Kühlmittel (8) gekühlt sind.

8. Vorrichtung nach Anspruch 1, **dadurch gekennzeichnet, dass** die Rückseite der magnetisierten supraleitenden Formkörper (7) mit einer gut wärmeleitenden Platte (9) kontaktiert ist, die vorzugsweise aus Kupfer besteht.

9. Vorrichtung nach Anspruch 1, **dadurch gekennzeichnet, dass** die magnetisierten supraleitenden Formkörper (7) aus YBa₂Cu₃O₇ bestehen.

10. Vorrichtung nach Anspruch 1, **dadurch gekennzeichnet, dass** die Dauermagnetschienen (12) aus aneinander gereihten, magnetisch quer zur Schienenlängsachse gepelten Dauermagnetplatten (13) bestehen, wobei nebeneinander liegende Dauermagnetplatten (13) quer zur Schienenlängsachse eine ungleichnamige magnetische Polung aufweisen.

11. Vorrichtung nach Anspruch 10, **dadurch gekennzeichnet, dass** die Dauermagnetplatten (13) aus einer Nd-Fe-B-Legierung bestehen.

12. Vorrichtung nach Anspruch 1 und 2, **dadurch gekennzeichnet, dass** in der unteren und/oder der oberen Endposition der Lasteinheit (2) gegenüber der dabei erreichten Position der an der Lasteinheit (2) befindlichen magnetisierten supraleitenden Formkörper (7) mit definiertem Abstand eine Magnetanordnung zum Aufprägen des in den supraleitenden Formkörpern (7) einzufrierenden Magnetfeldes angeordnet ist, wobei der Abstand so bemessen ist, dass sich die zwischen Lasteinheit (2) und Dauermagnetschienen (12) gewünschte Luftspaltgröße ergibt.

13. Vorrichtung nach Anspruch 1, **dadurch gekennzeichnet, dass** die Größe des Luftspaltes zwischen Lasteinheit (2) und Dauermagnetschienen (12) auf einen Wert zwischen 0,15 mm und 2,0 mm eingestellt ist.

14. Vorrichtung nach Anspruch 1, **dadurch gekennzeichnet, dass** die magnetisierten supraleitenden Formkörper (7) unter einer vakuumdichten Abdeckung (14) angeordnet sind.

15. Vorrichtung nach Anspruch 14, **dadurch gekennzeichnet, dass** die vakuumdichte Abdeckung (14) aus einem unmagnetischen und elektrisch nichtleitenden Werkstoff besteht.

16. Vorrichtung nach Anspruch 1, **dadurch gekennzeichnet, dass** diese mit einem oder mehreren Feinstellmechanismen zum Justieren der Lage und der Winkelposition der magnetischen Bauteile ausgerüstet ist.

17. Vorrichtung nach Anspruch 1, **dadurch gekennzeichnet, dass** bei den elektromagnetischen Linearantrieben das System permanentmagnetisch erregter Pole (5) stationär und das stromgespeiste Spulensystem (6) an der Lasteinheit (2) angeordnet ist.

18. Vorrichtung nach Anspruch 1, **dadurch gekennzeichnet, dass** die Wicklung des stromgespeisten Spulensystems (6) als Zweiphasenwicklung ausgeführt ist.

19. Vorrichtung nach Anspruch 1, **dadurch gekennzeichnet, dass** das System permanentmagnetisch erregter Pole (5) einseitig zum stromgespeisten Spulensystems (6) angeordnet ist.

20. Vorrichtung nach Anspruch 1, **dadurch gekennzeichnet, dass** das System permanentmagnetisch erregter Pole (5) beidseitig des stromgespeisten Spulensystems (6) angeordnet ist.

21. Vorrichtung nach Anspruch 20, **dadurch gekennzeichnet, dass** bei dem beidseitig angeordneten System permanentmagnetisch erregter Pole (5) sich Pole mit gleichnamiger magnetischer Polarität gegenüber stehen.

22. Vorrichtung nach Anspruch 20, **dadurch gekennzeichnet, dass** bei dem beidseitig angeordneten System permanentmagnetisch erregter Pole (5) sich Pole mit ungleichnamiger magnetischer Polarität gegenüber stehen.

## Claims

1. Device for vertically transporting products, in particular for processing systems of semiconductor wafers and discs, including a load unit for receiving the products and a drive for the vertical movement of the load unit, the load unit (2) and the drive being formed without friction pairing by the use of magnetic components and coupled to each other without contact, in that
a) magnetized superconducting mouldings (7) which interact with vertically arranged permanent magnet rails (12) to form a magnetic tracking device for the load unit (2) are arranged, a constant air gap between the load unit (2) and the permanent magnet rails (12) being set by means of a magnetic field that is frozen in a defined form in the superconducting mouldings (7),
b) the magnetized superconducting mouldings (7) are cooled by a coolant (8) to the temperature required for the superconducting state,
and
c) the drive is realized by one or more electromagnetic linear drives, which respectively comprise a system of permanently magnetically excited poles (5) and a current-fed coil system (6) movably arranged in front of or between the poles.

2. Device according to Claim 1, **characterized in that** the magnetized superconducting mouldings (7) are arranged on the load unit (2) and the permanent magnet rails (12) are arranged in a stationary manner.

3. Device according to Claims 1 and 2, **characterized in that** the load unit (2) is equipped with a coolant container (4) for receiving the coolant (8) for the cooling of the magnetized superconducting mouldings (7).

4. Device according to Claim 3, **characterized in that** the coolant container (4) has an annular channel (10) for the coolant circulation and is equipped with a filler neck (11) for the coolant (8).

5. Device according to Claim 4, **characterized in that**, in the lower and/or upper end position of the load unit (2), the filler neck (11) is connected to a coolant reservoir for replenishing coolant (8).

6. Device according to Claim 1, **characterized in that** liquid nitrogen is used as the coolant (8).

7. Device according to Claims 1 and 2, **characterized in that** the magnetized superconducting mouldings (7) are arranged in the wall of the coolant container (4) and are cooled on their rear side by the coolant (8).

8. Device according to Claim 1, **characterized in that** the rear side of the magnetized superconducting mouldings (7) is contacted by a plate (9) with good thermal conduction, which preferably consists of copper.

9. Device according to Claim 1, **characterized in that** the magnetized superconducting mouldings (7) consist of YBa₂Cu₃O₇.

10. Device according to Claim 1, **characterized in that** the permanent magnet rails (12) comprise permanent magnet plates (13) arranged in series adjacent to one another and with magnetic polarity transverse to the longitudinal axis of the rails, adjacent permanent magnet plates (13) having opposite magnetic polarity transversely to the longitudinal axis of the rails.

11. Device according to Claim 10, **characterized in that** the permanent magnet plates (13) consist of an Nd-Fe-B alloy.

12. Device according to Claims 1 and 2, **characterized in that**, in the lower and/or upper end position of the load unit (2), a magnet arrangement for imposing the magnetic field to be frozen in the superconducting mouldings (7) is arranged at a defined distance with respect to the position thereby reached of the magnetized superconducting mouldings (7) located on the load unit (2), the distance being dimensioned such that the desired size of air gap is obtained between the load unit (2) and the permanent magnet rails (12).

13. Device according to Claim 1, **characterized in that** the size of the air gap between the load unit (2) and the permanent magnet rails (12) is set to a value between 0.15 mm and 2.0 mm.

14. Device according to Claim 1, **characterized in that** the magnetized superconducting mouldings (7) are arranged under a vacuum-tight covering (14).

15. Device according to Claim 14, **characterized in that** the vacuum-tight covering (14) consists of a nonmagnetic and electrically non-conducting material.

16. Device according to Claim 1, **characterized in that** it is equipped with one or more fine adjusting mechanisms for adjusting the position and the angular position of the magnetic components.

17. Device according to Claim 1, **characterized in that**, in the electromagnetic linear drives, the system of permanently magnetically excited poles (5) are arranged in a stationary manner and the current-fed coil system (6) is arranged on the load unit (2).

18. Device according to Claim 1, **characterized in that** the winding of the current-fed coil system (6) is configured as a two-phase winding.

19. Device according to Claim 1, **characterized in that** the system of permanently magnetically excited poles (5) is arranged on one side of the current-fed coil system (6).

20. Device according to Claim 1, **characterized in that** the system of permanently magnetically excited poles (5) is arranged on both sides of the current-fed coil system (6).

21. Device according to Claim 20, **characterized in that**, in the case of the system of permanently magnetically excited poles (5) arranged on both sides, poles with the same magnetic polarity are opposite one another.

22. Device according to Claim 20, **characterized in that**, in the case of the system of permanently magnetically excited poles (5) arranged on both sides, poles with opposite magnetic polarity are opposite one another.

## Revendications

1. Dispositif pour le transport vertical de produits, notamment pour des installations de traitement de plaquettes de semi-conducteurs et de disques, contenant une unité de chargement pour recevoir les produits et un entraînement pour le déplacement vertical de l'unité de chargement, l'unité de chargement (2) et l'entraînement étant associés sans frottement par paires et étant accouplés sans contact en utilisant des composants magnétiques, en ce que
a) des corps de moulage supraconducteurs magnétisés (7) sont disposés de telle sorte qu'en agissant en association avec les rails d'aimants permanents (12) disposés verticalement, ils forment un dispositif de retenue de voie magnétique pour l'unité de chargement (2), une lame d'air constante étant maintenue entre l'unité de chargement (2) et les rails d'aimants permanents (12) au moyen d'un champ magnétique figé défini dans les corps de moulage supraconducteurs (7),
b) les corps de moulage supraconducteurs magnétisés (7) sont refroidis par un réfrigérant (8) à la température nécessaire à l'état supraconducteur,
et
c) l'entraînement est réalisé par un ou plusieurs entraînements électromagnétiques linéaires qui sont chacun constitués d'un système de pôles (5) excités par aimants permanents et d'un système de bobines (6) alimenté par du courant et disposé de manière mobile avant ou entre les pôles.

2. Dispositif selon la revendication 1, **caractérisé en ce que** les corps de moulage supraconducteurs magnétisés (7) sont disposés sur l'unité de chargement (2) et les rails d'aimants permanents (12) sont disposés de manière fixe.

3. Dispositif selon les revendications 1 et 2, **caractérisé en ce que** l'unité de chargement (2) est équipée d'un récipient de réfrigérant (4) pour contenir le réfrigérant (8) pour le refroidissement des corps de moulage supraconducteurs magnétisés (7).

4. Dispositif selon la revendication 3, **caractérisé en ce que** le récipient de réfrigérant (4) possède un canal annulaire (10) pour la circulation du réfrigérant et qu'il est pourvu d'un embout de remplissage (11) pour le réfrigérant (8).

5. Dispositif selon la revendication 4, **caractérisé en ce que** l'embout de remplissage (11) est relié en bout de course inférieure et/ou supérieure de l'unité de chargement (2) avec un récipient de réserve de réfrigérant pour compléter le remplissage de réfrigérant (8).

6. Dispositif selon la revendication 1, **caractérisé en ce qu'**on utilise de l'azote liquide comme réfrigérant (8).

7. Dispositif selon les revendications 1 et 2, **caractérisé en ce que** les corps de moulage supraconducteurs magnétisés (7) sont disposés dans la paroi du récipient de réfrigérant (4) et sont refroidis à l'arrière par le réfrigérant (8).

8. Dispositif selon la revendication 1, **caractérisé en ce que** l'arrière des corps de moulage supraconducteurs magnétisés (7) est en contact avec une plaque (9) bonne conductrice thermique qui est de préférence en cuivre.

9. Dispositif selon la revendication 1, **caractérisé en ce que** les corps de moulage supraconducteurs magnétisés (7) sont constitués de YBa₂Cu₃O₇.

10. Dispositif selon la revendication 1, **caractérisé en ce que** les rails d'aimants permanents (12) sont constitués de plaques d'aimants permanents (13) mutuellement alignées de polarité magnétique transversale à l'axe longitudinal des rails, les plaques d'aimants permanents (13) adjacentes présentant une polarité magnétique de nom différent transversalement à l'axe longitudinal des rails.

11. Dispositif selon la revendication 10, **caractérisé en ce que** les plaques d'aimants permanents (13) sont constituées d'un alliage de Nd-Fe-B.

12. Dispositif selon les revendications 1 et 2, **caractérisé en ce qu'**en bout de course inférieure et/ou supérieure de l'unité de chargement (2) par rapport à la position atteinte alors par les corps de moulage supraconducteurs magnétisés (7) se trouvant sur l'unité de chargement (2), se trouve disposé un arrangement magnétique à une distance définie pour imprimer le champ magnétique à figer dans les corps de moulage supraconducteurs (7), la distance étant dimensionnée de manière à obtenir la largeur souhaitée de la lame d'air entre l'unité de chargement (2) et les rails d'aimants permanents (12).

13. Dispositif selon la revendication 1, **caractérisé en ce que** la dimension de la lame d'air entre l'unité de chargement (2) et les rails d'aimants permanents (12) est réglée à une valeur entre 0,15 mm et 2,0 mm.

14. Dispositif selon la revendication 1, **caractérisé en ce que** les corps de moulage supraconducteurs magnétisés (7) sont disposés sous un recouvrement (14) étanche au vide.

15. Dispositif selon la revendication 14, **caractérisé en ce que** le recouvrement (14) étanche au vide est constitué d'un matériau non magnétique et électriquement isolant.

16. Dispositif selon la revendication 1, **caractérisé en ce que** celui-ci est pourvu d'un ou de plusieurs mécanismes de réglage fin pour ajuster la situation et la position angulaire des composants magnétiques.

17. Dispositif selon la revendication 1, **caractérisé en ce que** dans les entraînements électromagnétiques linéaires, le système de pôles (5) excités par aimants permanents est disposé de manière fixe et le système de bobines (6) alimenté par du courant est disposé sur l'unité de chargement (2).

18. Dispositif selon la revendication 1, **caractérisé en ce que** le bobinage du système de bobines (6) alimenté par du courant est réalisé sous la forme d'un bobinage diphasé.

19. Dispositif selon la revendication 1, **caractérisé en ce que** le système de pôles (5) excités par aimants permanents est disposé d'un seul côté par rapport au système de bobines (6) alimenté par du courant.

20. Dispositif selon la revendication 1, **caractérisé en ce que** le système de pôles (5) excités par aimants permanents est disposé des deux côtés du système de bobines (6) alimenté par du courant.

21. Dispositif selon la revendication 20, **caractérisé en ce que** dans le système de pôles (5) excités par aimants permanents disposé des deux côtés, les pôles de polarité magnétique de même nom se trouvent face à face.

22. Dispositif selon la revendication 20, **caractérisé en ce que** dans le système de pôles (5) excités par aimants permanents disposé des deux côtés, les pôles de polarité magnétique de nom différent se trouvent face à face.
